# EUROPEAN PATENT APPLICATION

(11) **EP 4 632 662 A1**
(43) Date of publication of application: **15.10.2025**
(21) Application number: 23900918.6
(22) Date of filing: 07.11.2023
(51) Int. Cl.: G06Q 50/20, G09B 19/06, G09B 7/02, G09B 5/02, G09B 5/04

(54) **ENGLISH WORD LEARNING SYSTEM AND METHOD BASED ON KOREAN VOCABULARY ABILITY LEVEL**

(30) Priority: 05.12.2022 KR 20220168124
(71) Applicant: Im, Sun Hee, Seoul 06506 (KR); Rho, Seunghoon, Seoul 06506 (KR)
(72) Inventor: Im, Sun Hee, Seoul 06506 (KR); Rho, Seunghoon, Seoul 06506 (KR)
(74) Representative: Valet Patent Services Limited
(86) International application number: PCT/KR2023/017796
(87) International publication number: WO 2024/122899

(57) **Abstract**

The present invention relates to an English word learning system and method based on a Korean vocabulary proficiency level, and specifically, to an English word learning system and method in which a concept word understood in Korean by a learner is set as a target English word to be learned, so as to prevent the learner from learning English words that are beyond the Korean vocabulary proficiency of the learner, thereby minimizing learning resistance and improving learning efficiency, English word tests are conducted in the order of concept, pronunciation and spelling, rather than learning English words on the basis of a uniform standard, so that the learning proficiency of the learner is confirmed, thereby allowing learning of English words the learner already knows to be excluded and words that should be learned to be selected, the area from among listening, speaking and spelling in which the learner is weak is determined according to the results of sequentially-conducted tests, so that customized English word learning is performed, and pronunciation and speaking are learned first before spelling so that learning is not for passing a test but rather for enabling smooth communication.

## Description

### [TECHNICAL FIELD]

The present invention relates to an English word learning system and method based on a Korean vocabulary proficiency level, and more particularly, to an English word learning system and method in which a concept word understood in Korean by a learner is set as a target English word to be learned, so as to prevent the learner from learning English words that are beyond the Korean vocabulary proficiency of the learner, thereby minimizing learning resistance and improving learning efficiency, English word tests are conducted in the order of concept, pronunciation and spelling, rather than learning English words on the basis of a uniform standard, so that the learning proficiency of the learner is confirmed, thereby allowing learning of English words the learner already knows to be excluded and words that should be learned to be selected, the area from among listening, speaking and spelling in which the learner is weak is determined according to the results of sequentially-conducted tests, so that customized English word learning is performed, and pronunciation and speaking are learned first before spelling so that learning is not for passing a test but rather for enabling smooth communication.

### [BACKGROUND ART]

English is an international language used in many countries around the world, including the United States, the United Kingdom, Canada, and Australia, and the necessity to learn English is increasing day by day due to the progress of globalization. Thus, systems capable of leaming English without time and space constraints as disclosed in the following patent literature have been widely developed.

### <Patent Literature>

Korean Patent Application Publication No. 10-2002-0061239 (published on July 24, 2002), entitled " System and Method for Learning English through the Internet"

However, the conventional English learning system has the problem in that it do not take into consideration the individual learning proficiency, and make it virtually impossible to learn English effectively, e.g., for the purpose of passing a test.

### [DETAILED DESCRIPTION OF THE INVENTION]

### [Technical Problem]

The present invention has been devised to solve the above problems, and an object of the present invention is to provide an English word learning system and method in which a concept word understood in Korean by a learner is set as a target English word to be learned, so as to prevent the learner from learning English words that are beyond the Korean vocabulary proficiency of the learner, thereby minimizing learning resistance and improving learning efficiency.

Another object of the present invention is to provide an English word learning system and method in which English word tests are conducted in the order of concept, pronunciation and spelling, rather than learning English words on the basis of a uniform standard, so that the learning proficiency of the learner is confirmed, thereby allowing learning of English words the learner already knows to be excluded and words that should be learned to be selected.

Yet another object of the present invention is to provide an English word learning system and method in which the area from among listening, speaking and spelling in which the learner is weak is determined according to the results of sequentially-conducted tests, so that customized English word learning is performed, and pronunciation and speaking are learned first before spelling so that learning is not for passing a test but rather for enabling smooth communication.

Further object of the present invention is to provide an English word learning system and method in which when words are output to a learner terminal 100 for testing and/or learning, words with a lower conceptual difficulty level are output first, and in the case of words with the same conceptual difficulty level, the words with the lower English pronunciation and spelling difficulty level is output in consideration of phonics.

### [Technical Solution]

In order to achieve the above object, the present invention is implemented by certain embodiments having the following configurations.

According to certain embodiments of the present invention, there is provided a n English word learning system comprising a learning server that analyzes information output from a learner terminal to enable English word learning customized for the learner, wherein the learning server comprises: a word allocation unit that allocates English words to be learned by the learner in the current learning round based on the leamer's information when information indicating that English word learning is started is output from the learner terminal; and a word test unit that enables the learner to be tested on the English words allocated by the word allocation unit, analyzes the test results, and classifies them into English words that require learning and English words that do not require learning.

According to certain other embodiments of the present invention, in the English word learning system of the present invention, the word test unit comprises: a concept test module that transmits to a learner terminal a question that can determine whether the learner knows Korean concepts corresponding to the English words allocated by the word allocation unit, and confirms an answer to the question output from the learner terminal to determine whether or not the answer is correct; and a pronunciation test module that transmits to a learner terminal a question that can determine whether the learner knows English pronunciation corresponding to the English words matching with the question which the concept test module determines the answer to be correct, and confirms an answer to the question output from the learner terminal to determine whether or not the answer is correct, and the pronunciation test module comprises: a listening module that transmits to the learner terminal a question that can determine whether the learner can accurately listen English words matching with the question which the concept test module determines the answer to be correct, and confirms an answer to the question output from the learner terminal to determine whether or not the answer is correct; a time confirmation module that selects the question which the listening module determines the answer to be correct, and calculates and outputs the time required for the learner to answer to the selected question; and a speaking module that compares the answer time output by the time confirmation module with a preset first reference value, transmits to the learner terminal a question that can determine whether the learner can accurately pronounce English words matching with the question having an answer time shorter than the first reference value, and confirms an answer to the question output from the learner terminal to determine whether or not the answer is correct.

According to certain other embodiments of the present invention, in the English word learning system of the present invention, the word test unit further comprises: a spelling test module that transmits to the learner terminal a question that can determine whether the learner knows English spelling corresponding to English words matching with the question which the speaking module determines the answer to be correct, and confirms an answer to the question output from the learner terminal to determine whether or not the answer is correct, and the spelling test module comprises: a transmission module that transmits to the learner terminal a question that can determine whether the learner knows English spelling corresponding to English words matching with the question which the speaking module determines the answer to be correct; a determination module that confirms an answer to the question output from the learner terminal that can determine whether the learner knows English spelling to thereby determine whether or not the answer is correct; and a time measurement module that selects the question which the determination module determines the answer to be correct, and calculates and outputs the time required for the learner to answer to the selected question.

According to certain other embodiments of the present invention, in the English word learning system of the present invention, wherein the word test unit further comprises: a classification module that analyzes the results output from the concept test module and the spelling test module and classifies them into English words that requires learning and English words that do not require learning, and the classification module comprises: a first exclusion module that determines that the learner does not know Korean concepts corresponding to the English word matching with the question which the concept test module determines that the answer is not correct, and classifies the English word as an English word that do not require learning; a second exclusion module that compares the answer time output by the time measurement module with a preset second reference value, determines that English words matching with the question having the answer time shorter than the second reference value are words that the learner already knows, and classifies them as English words that do not require learning; and a selection module that classifies the remaining English words, excluding the English words that are classified as those not requiring learning in the first exclusion module or the second exclusion module among the English words allocated by the allocation module, into English words that require learning.

According to certain other embodiments of the present invention, in the English word learning system of the present invention, the learning server further comprises: a learning unit that provides a learner with customized English vocabulary learning content based on the analysis results of the pronunciation test module and the spelling test module with respect to the English words classified as those needing to be learned by the classification module, the learning unit comprises: a listening learning module that analyzes the output result of the pronunciation test module to select English words that the learner cannot listen accurately, and determines the leamer's listening proficiency for the English words to enable listening learning customized for the learner; a speaking learning module that outputs learning content to the learner terminal so that the learner can perform speaking learning with respect to English words matching with the question which the speaking module determines that the answer is not correct, and a spelling learning module that analyzes the output result of the spelling test module to select English words that the learner does not know the spelling correctly, and enables the learner to perform customized spelling learning for the English words, and the listening learning module comprises: a listening target selection module in which English words matching with the question which the listening module determines that the answer is not correct and English words matching with the question whose answer time output by the time confirmation module is longer than the first reference value are selected as English words that require listening learning; a first listening learning module in which learning content is output to the learner terminal to enable the learner to perform listening learning with respect to English words matching with the question which the listening module determines the answer to be incorrect, among the English words selected by the listening target selection module; and a second listening learning module in which that learning content is output to the learner terminal to enable a learner to perform listening learning with respect to English words matching with the question whose answer time output by the time confirmation module is longer than the first reference value, among the English words selected by the listening target selection module, and the learning content output by the first listening learning module comprises learning content that enables more listening learning than the learning content output by the second listening learning module.

According to certain further other embodiments of the present invention, there is provided an English word learning method comprising: a word allocation step in which a learning server allocates English words to be learned by a learner in the current learning round based on the leamer's information when information indicating that English word learning is started is output from a learner terminal; a word test step in which the learning server enables the learner to be tested on the English words allocated in the word allocation step, analyzes the test results, and classifies them into English words that require learning and English words that do not require learning in the current learning round; and a learning step in which the learning server provides English word learning content customized for the learner based on the analysis results of the word test step with respect to the English words that are classified as those having to be learned in the current round in the word test step, wherein the word test step comprises: a concept test step in which the learning server transmits to the learner terminal a question that can determine whether the learner knows Korean concepts corresponding to the English words allocated in the word allocation step, and confirms an answer to the question output from the learner terminal to determine whether or not the answer are correct; and a pronunciation test step in which the learning server transmits to the learner terminal a question that can determine whether the learner knows English pronunciation corresponding to the English words matching with the question which determines the answer to be correct in the concept test step, and confirms an answer to the question output from the learner terminal to determine whether or not the answer is correct.

According to certain other embodiments of the present invention, in the English word learning method of the present invention, the pronunciation test step comprises: a listening step in which the learning server transmits to the learner terminal a question that can determine whether the learner can accurately listen the English words matching with the question determined to be correct in the concept test step, and confirms an answer to the question output from the learner terminal to determine whether or not the answer is correct; a time confirmation step in which the learning server selects the question which is determined the answer to be correct in the listening step, and calculates and outputs the time required for the learner to answer to the selected question; and a speaking step in which the learning server compares the answer time output from the time confirmation step with a preset first reference value, transmits to the learner terminal a question that can determine whether the learner can accurately pronounce the English words matching with the question having an answer time shorter than the first reference value, and confirms an answer to the question output from the learner terminal to determine whether or not the answer is correct, and the word test step comprises: a spelling test step in which the learning server transmits to the learner terminal a question that can determine whether the learner knows the English spelling corresponding to the English words matching with the question which is determined the answer to be correct in the speaking step, and confirms an answer to the question output from the learner terminal to determine whether or not the answer is correct; and a classification step in which the learning server analyzes the results output from the concept test step and the spelling test step, and classifies them into English words that require learning and English words that do not require learning in the current learning round.

According to certain other embodiments of the present invention, in the English word learning method of the present invention, the classification step comprises: a first exclusion step in which the learning server determines that the learner does not know Korean concepts corresponding to the English words matching with the question which is determined the answer to be incorrect in the concept test step, and classifies them into English words that do not require learning in the current learning round; a second exclusion step in which the learning server compares the answer time output in the time measurement step with a preset second reference value, determines that the English words matching with the question having the answer time shorter than the second reference value are words that the learner already knows, and classifies them into English words that do not require learning in the current learning round; and a selection step in which the learning server classifies the remaining English words, excluding the English words classified as those not requiring learning in the first exclusion step or the second exclusion step, from among the English words allocated in the allocation step, into English words that require learning, and the learning step comprises: a listening learning step in which a learning server analyzes the output result of the pronunciation test step, selects English words that the learner cannot listen correctly, and determines the leamer's listening proficiency for the English words to enable listening learning customized for the learner; a speaking learning step in which the learning server outputs to the learner terminal the learning content that enables the learner to perform speaking learning with respect to English words matching with the question which is determined the answer to be incorrect in the speaking step; and a spelling learning step in which the learning server analyzes the output results of the spelling test step to select English words that the learner does not know the spelling correctly and enables the learner to perform customized spelling learning for the English words.

### [Advantageous Effects]

According to the present invention, it is possible to provide the following effects through the combination of the above-described embodiments with the configuration described below and the use relationship thereof.

According to the present invention, a concept word understood in Korean by a learner is set as a target English word to be learned, so as to prevent the learner from learning English words that are beyond the Korean vocabulary proficiency of the learner, thereby capable of minimizing learning resistance and improving learning efficiency.

Further, according to the present invention, English word tests are conducted in the order of concept, pronunciation and spelling, rather than learning English words on the basis of a uniform standard, so that the learning proficiency of the learner is identified, thereby allowing learning of English words the learner already knows to be excluded and words that should be learned to be selected.

Further, according to the present invention, the area from among listening, speaking and spelling in which the learner is weak is determined according to the results of sequentially-conducted tests, so that customized English word learning is performed, and pronunciation and speaking are learned first before spelling so that learning is not for passing a test but rather for enabling smooth communication.

Further, according to the present invention, when words are output to a learner terminal 100 for testing and/or learning, words with a lower conceptual difficulty level are output first, and in the case of words with the same conceptual difficulty level, the word with the lower English pronunciation and spelling difficulty level is output in consideration of phonics, thereby improving the efficiency of the learning.

### [BRIEF DESCRIPTION OF THE DRAWINGS]

FIG. 1 is a block diagram of an English word learning system according to an embodiment of the present invention.
FIG. 2 is a block diagram showing the detailed configuration of the learning server of FIG. 1.
FIG. 3 is a block diagram showing the detailed configuration of the word test unit of FIG. 2.
FIG. 4 is a block diagram showing the detailed configuration of the pronunciation test module of FIG. 3.
FIG. 5 is a block diagram showing the detailed configuration of the spelling test module of FIG. 3.
FIG. 6 is a block diagram showing the detailed configuration of the classification module of FIG. 3.
FIG. 7 is a block diagram showing the detailed configuration of the learning unit of FIG. 2.
FIG. 8 is a block diagram showing the detailed configuration of the listening learning module of FIG. 7.
FIG. 9 is a block diagram showing the detailed configuration of the spelling learning module of FIG. 7.
FIGS. 10 and 11 are diagrams showing a question output to the learner terminal by the concept test module of FIG. 3.
FIG. 12 is a diagram showing a question output to the learner terminal by the listening module of FIG. 4.
FIG. 13 is a diagram showing a question output to the learner terminal by the transmission module of FIG. 5.

### [DETAILED DESCRIPTION OF THE EMBODIMENTS]

Hereinafter, preferred embodiments of the English word learning system and method based on the Korean vocabulary proficiency level according to the present invention will be described in detail with reference to the accompanying drawings.

It should be noted that the same elements in the drawings will be designated by the same reference numerals wherever possible. Unless otherwise defined, all terms used herein have the same meaning as commonly understood by one of ordinary skill in the art to which this invention belongs. When terms used herein discord from the commonly understood meaning, the terms will be interpreted as defined herein. Throughout the specification, when a part 'includes' a certain component, it means further including other components, rather than excluding other components, unless otherwise stated. In addition, terms such as "...unit ", "... module", etc. described herein mean a unit that processes at least one function or operation, which can be implemented by hardware, software, or a combination of hardware and software.

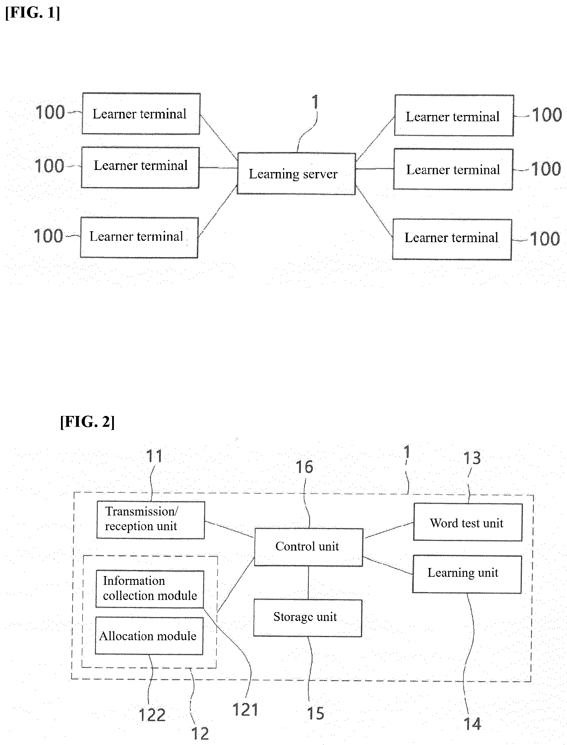

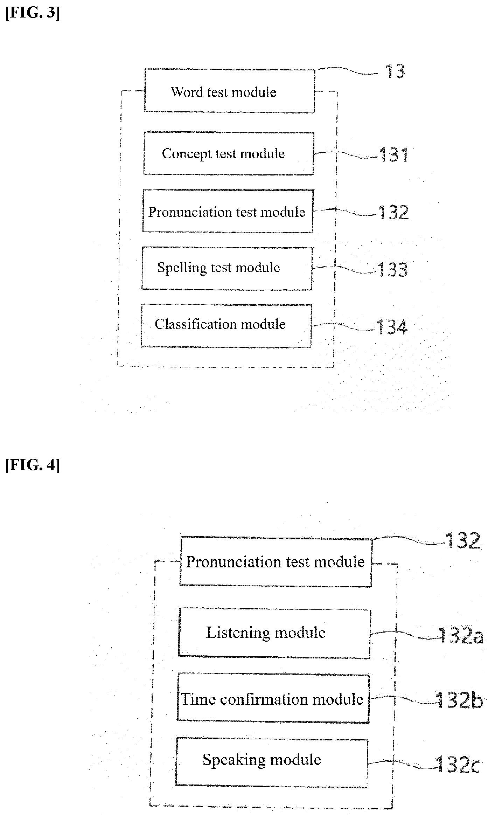

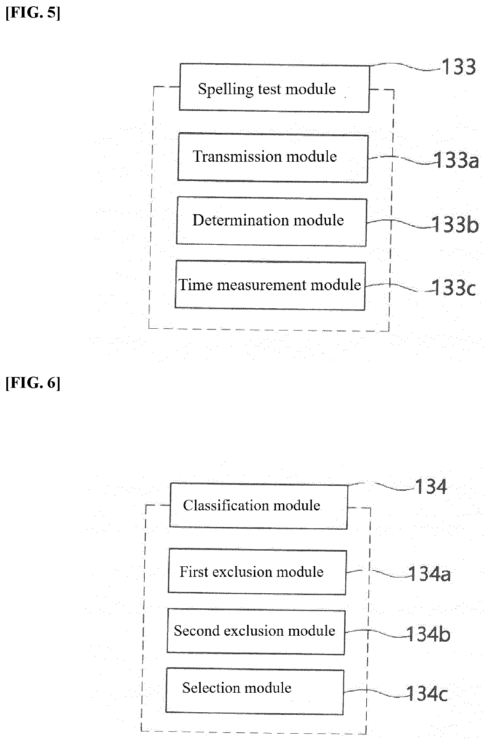

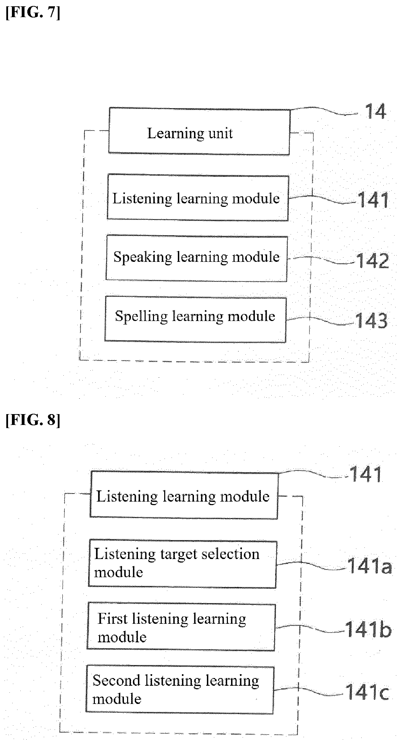

An English word learning system based on a Korean vocabulary proficiency level according to an embodiment of the present invention is described with reference to FIGS. 1 to 13. The English word learning system includes a learning server 1 that analyzes information output from a learner terminal 100 to enable English word learning customized for the learner, a learner terminal 100 that exchanges information with the learning server 1, and the like.

The learner terminal 100 has a configuration that is used by a learner who wants to learn English words using the English word learning system to exchange information with the learning server 1. The learner terminal 100 can be an electronic device capable of exchanging information and storing information via the Internet, such as a PC, a smartphone, a tablet, and the like can be used. The exchange of information through the learner terminal 100 is performed by an information processing app that is transmitted and installed from the learning server 1, or by accessing a homepage managed by the learning server 1 through the learner terminal 100.

The learning server 1 is configured to analyze information output from the learner terminal 100 to enable English word learning customized for the learner, and includes a transmission/reception unit 11, a word allocation unit 12, a word test unit 13, a learning unit 14, a storage unit 15, and a control unit 16.

The transmission/reception unit 11 is connected to the learner terminal 100 to exchange information.

The word allocation unit 12 is configured to allocate English words that the learner should learn in the current learning round based on the leamer's information when information indicating that English word learning is started is output from the learner terminal 100, and includes an information collection module 121, an allocation module 122, and the like.

The information collection module 121 has a configuration that collects information necessary to indirectly determine the leamer's current English proficiency, and collects information output from the learner terminal 100 and information stored in the storage unit 15. For example, the collected information may include age, English learning period, grade, previous learning information, and the like.

The allocation module 122 has a configuration that allocates English words that the learner should learn in the current learning round based on the leamer's information collected by the information collection module 121. For example, when the leamer's age is high and the period of English learning is long, the leamer's English proficiency is determined to be high, and if the English proficiency is determined to be high, more difficult words are allocated than when the English proficiency is determined to be low. That is, if English words that are too high or low compared to the leamer's English proficiency are learned, the efficiency of English word learning decreases, so that the word allocation unit 12 allocates words to be learned in the current learning round according to a uniform standard based on the leamer's existing information. However, the word allocation unit 12 selects words to be learned in the current learning round based only on the leamer's past learning information and objective information, i.e., does not take into consideration the leamer's subjective English learning proficiency, so that the English words allocated by the word allocation unit 12 are tested by the learner to select words to be learned, and a customized learning method is presented for each selected word, which will be described in detail below.

The word test unit 13 has a configuration that enables the learner to be tested on the English words allocated by the word allocation unit 12, analyzes the test results, and classifies them into English words that require learning and English words that do not require learning in the current learning round, and includes a concept test module 131, a pronunciation test module 132, a spelling test module 133, a classification module 134, and the like. When words are output to the class terminal 100 for the leamer's test, the word test unit 13 outputs words with a lower conceptual difficulty level first, and outputs words with a lower English pronunciation and spelling difficulty level in consideration of phonics in the case of words with the same conceptual difficulty level.

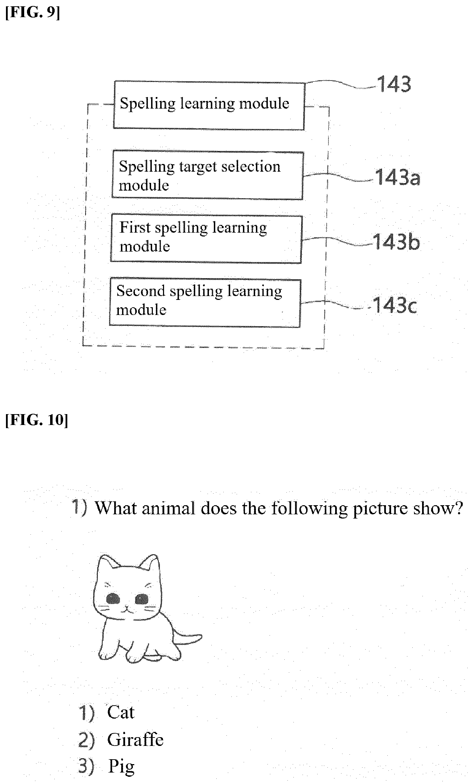

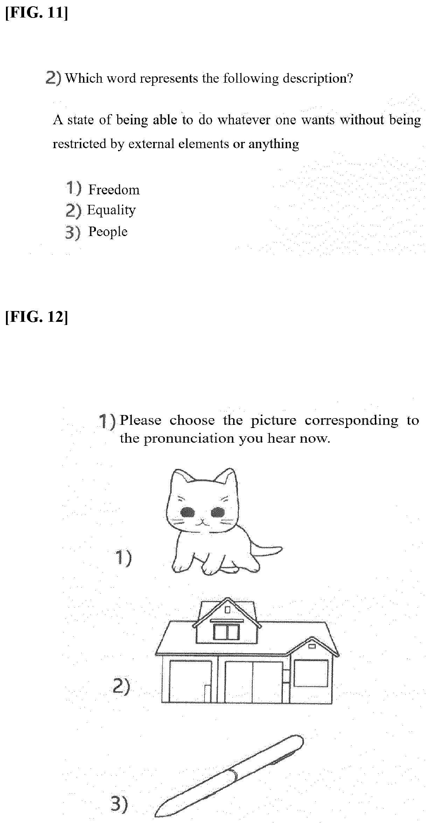

The concept test module 131 has a configuration that transmits to the learner terminal 100 a question that can determine whether the learner knows Korean concepts corresponding to the English words allocated by the word allocation unit 12, and confirms an answer to the question output from the learner terminal 100 to determine whether or not the answer is correct. For example, the question may have a question form that matches a Korean word to a specific image, i.e., a question form that explains the meaning in Korean and selects a Korean word that matches it, and the like. Specifically, assuming that the English words allocated by the word allocation unit 12 are cat and freedom, the concept test module 131 can output to the learner terminal 100 a question as shown in FIGS. 10 and 11, as the question that can determine whether the learner knows Korean concepts corresponding to the allocated English words. If an answer to the question is output from the learner terminal 100, the concept test module 131 determines whether or not the answer is correct. If the concept test module 131 determines that the answer is not correct, the classification module 134, which will be described later, determines that the learner does not know Korean concepts corresponding to the English words that do not give a correct answer, and classifies them as English words that do not require learning in the current learning round. Specifically, if the correct answer is recognized for the question shown in FIG. 10, and if the incorrect answer is recognized for the question shown in FIG. 11, the classification module 134 classifies freedom as an English word that does not need to be learned in the current learning round. This means that if the learner has to learn English words related to words for which the learner does not understand the Korean concepts, the learning burden is heavy and the learner can easily lose interest. Therefore, the present invention prevents the learner from learning English words that are beyond the Korean vocabulary proficiency of the learner, thereby minimizing learning resistance and improving learning efficiency,

The pronunciation test module 132 has a configuration that transmits the learner terminal 100 a question that can determine whether the learner knows English pronunciation for English words matching with the question that the concept test module 311 determines the answer to be correct, and confirms an answer to the question output from the learner terminal 100 to determine whether or not the answer is correct, and includes a listening module 132a, a time confirmation module 132b, a speaking module 132c, and the like.

The listening module 132a has a configuration that transmits to the learner terminal 100 a question that can determine whether the learner can accurately listen English words matching with the question that the concept test module 131 determines the answer to be correct, and confirms an answer to the question output from the learner terminal 100 to determine whether or not the answer is correct. For example, the question may have a question form that allows the learner to audibly hear a particular English pronunciation and select an image that matches it, or a question format that shows images first and then allows the learner to select the English word pronunciation that is heard in sequence, as shown in FIG. 12.

The time confirmation module 132b has a configuration that selects a question that the listening module 132a determines the answer to be correct, and calculate and outputs the time required for the learner to answer to the selected question. For example, assuming that the listening module 132a transmits questions A, B and C, and the learner terminal 100 outputs an incorrect answer to question A and a correct answer to questions B and C, and that the time at which the correct answer is output is 0.5 seconds for question B and 5 seconds for question C, the time confirmation module 132b selects questions B and C, and outputs information that the answer time to question B is 0.5 seconds, and the answer time to question C is 5 seconds.

The speaking module 132c has a configuration that compares the answer time output by the time confirmation module 132b with a preset first reference value, transmits to the learner terminal 100 a question that can determine whether the learner can accurately pronounce (speak) English words matching with the question with a shorter answer time than the first reference value, and confirms an answer to the question output from the learner terminal 100 to determine whether the answer is correct. For example, the question may have a question form that shows a specific image and asks the learner to pronounce the English word corresponding to the image. The first reference value is determined by taking into consideration the time it takes to hear the pronunciation of the English word and understand it immediately without careful consideration. For example, if the first reference value is set to 1 second, and the time confirmation module 132b outputs information that the answer time to question B is 0.5 seconds and the answer time to question C is 5 seconds, the speaking module 132c transmits to the learner terminal 100 only questions that can determine whether the learner can correctly pronounce the English word that matches with the question B.

The spelling test module 133 has a configuration that transmits to the learner terminal 100 a question that can determine whether the learner knows the English spelling corresponding to the English words that match with the question that the speaking module 132b determines the answer to be correct, and confirms an answer to the question output from the learner terminal 100 to determine whether the answer is correct, and includes a transmission module 133a, a determination module 133b, a time measurement module 133c, and the like.

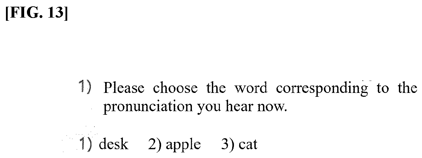

The transmission module 133a has a configuration that transmits to the learner terminal 100 a question that can determine whether the learner knows the English spelling corresponding to the English words matching with the question that the speaking module 132c determines the answer to be correct. For example, the question can have a question form that allows the learner to audibly hear a particular English pronunciation and select an English spelling that matches to it, or a question format that shows images and then allows the learner to select the English spelling that matches to the image as shown in FIG. 13.

The determination module 133b has a configuration that confirms an answer to the question output from the learner terminal 100 to determine whether the learner knows English spelling, and determines whether the answer is correct.

The time measurement module 133c has a configuration that selects a question that the determination module 133b determines the answer to be correct, and calculates and outputs the time required for the learner to answer to the selected question.

The classification module 134 has a configuration that analyzes the results output from the concept test module 131 and the spelling test module 132 and classify them into English words that require learning and English words that do not require learning in the current learning round, and includes a first exclusion module 134a, a second exclusion module 134b, a selection module 134c, and the like.

The first exclusion module 134a has a configuration that determines that the learner does not know the Korean concepts corresponding to the English words matching with the question that the concept test module 131 determines the answer to be incorrect, and classifies them as English words that do not require learning in the current learning round.

The second exclusion module 134b has a configuration that compares the answer time output by the time measurement module 133c with a preset second reference value, determines that the English words matching with the questions with a shorter answer time than the second reference value are words that the learner already knows, and classifies them into English words that do not require learning in the current learning round. The second reference value is determined by taking into consideration the time it takes to select the spelling of a specific English word without careful consideration.

The selection module 134b has a configuration that classifies the remaining English words, excluding the English words that are classified as those not requiring learning in the first exclusion module 134a or the second exclusion module 134b among the English words allocated by the allocation module 122, into English words that require learning. The classification module 134 classifies English words for which the learner does not understand the Korean concepts and English words for which the learner knows the pronunciation, speaking and spelling correctly, into words that do not require learning, allows learning to be performed on English words as to whether the pronunciation, speaking, spelling, and the like are correct, thereby increasing the efficiency of English learning. In addition, a customized English learning method is presented based on the results of the pronunciation, and pronunciation and speaking are learned first before spelling so that learning is not for passing a test but rather for enabling smooth communication. This will be described in detail below.

The learning unit 14 has a configuration that provide the learner with customized English word learning content based on the analysis results of the pronunciation test module 132 and the spelling test module 133 for the English words classified by the classification module 134 as those to be learned in the current learning round, and includes a listening learning module 141, a speaking learning module 142, a spelling learning module 143, and the like. When words are input to the classroom terminal 100 for the learner's learning, the learning unit 14 outputs words with a lower conceptual difficulty level first, and in the case of words with the same conceptual difficulty level, outputs words with a lower pronunciation and spelling difficulty level in English in consideration of phonics.

The listening learning module 141 has a configuration that analyze the output result of the pronunciation test module 132 to select English words that the learner cannot listen accurately and determine the leamer's listening proficiency for the English words, thereby enabling listening learning customized for the learner, and includes a listening target selection module 141a, a first listening learning module 141b, a second listening learning module 141c, and the like.

The listening target selection module 141a has a configuration that select English words matching with questions that the listening module 132a determines to the answer to be not correct and English words matching with questions whose answer time output by the time confirmation module 132b is longer than the first reference value as English words that require listening learning.

The first listening learning module 141b has a configuration that outputs to the learner terminal 100 the learning content which enables the learner to perform listening learning for the English words matching with the questions that the listening module 132a determines the answer to be incorrect, among the English words selected by the listening target selection module 141a.

The second listening learning module 141c has a configuration that outputs to the learner terminal 100 the learning content that enables the learner to perform listening learning for English words that match to questions whose answer time output by the time confirmation module 132b is longer than the first reference value, among English words selected by the listening target selection module 141a. Among the English words selected by the listening target selection module 141a, the English words matching with the question that the listening module 132a determines the answer to be incorrect correspond to cases where the learner does not know the pronunciation at all, and the English words matching with the questions whose answer time output by the time confirmation module 132b is longer than the first reference value correspond to cases where the learner knows the pronunciation but would not know it without careful consideration. Therefore, the learning content output by the first listening learning module 141b includes learning content that allows for more listening training than the learning content output by the second listening learning module 141c. For example, the first listening learning module 141b may be configured to listen to the pronunciation of English words 20 times, and the second listening learning module 141c may be configured to listen to the pronunciation of English words 10 times. The listening learning module 141 may not perform listening learning on the basis of a uniform standard when the learner does not accurately understand the English pronunciation, but may vary the level of listening learning depending on the level of the leamer's understanding of English pronunciation, thereby enabling efficient listening learning.

The speaking learning module 142 has a configuration that outputs to the learner terminal 100 the learning content that enables the learner to perform speaking learning for English words that match to the question that the speaking module 132c determines the answer to be incorrect.

The spelling learning module 143 has a configuration that analyzes the output result of the spelling test module 133, selects English words that the learner does not know the spelling correctly, and enables the learner to perform customized spelling learning for the English words, and includes a spelling target selection module 143a, a first spelling learning module 143b, a second spelling learning module 143c, and the like.

The spelling target selection module 143a has a configuration that selects English words matching with questions that the determination module 133b determines the answer to incorrect and English words matching with questions whose answer time output by the time measurement module 133c is longer than the second reference value as English words that require spelling learning.

The first spelling learning module 143b has a configuration that outputs to the learner terminal 100 the learning content that enables the learner to perform spelling learning for the English words that match to the questions that the determination module 133b determines the answer to be incorrect, among the English words selected by the spelling target selection module 143a.

The second spelling learning module 143c has a configuration that outputs to the learner terminal 100 the learning content that enables the learner to perform spelling learning for English words matching with a question whose answer time output by the time measurement module 133c is longer than the second reference value among the English words selected by the spelling target selection module 143a. Among the English words selected by the spelling target selection module 143a, the English words matching with the question that the determination module 133b determines the answer to be incorrect correspond to cases where the learner does not know the spelling at all, and the English words matching with the question whose answer time output by the time measurement module 133c is longer than the second reference value correspond to cases where the learner knows the spelling but cannot understand it without careful consideration. Therefore, the learning content output by the first spelling learning module 143b includes learning content that enables more spelling learning training than the learning content output by the second spelling learning module 143c. The spelling learning module 143 does not uniformly perform spelling learning when the learner does not understand English spelling correctly, but rather allows the level of spelling learning to vary depending on the leamer's level of understanding of English word spelling, thereby enabling efficient spelling learning.

The storage unit 15 has a configuration that stores information necessary for the operation of the English word learning system and information generated by the English word learning system, and the control unit 16 has a configuration that controls the overall operation of the English word learning system. According to the present invention, tests are conducted in the order of concept, pronunciation and spelling, to select English words for which the learner does not know the Korean concepts and English words that the learner already knows, and exclude them from the learning, thereby increasing the efficiency of learning. The area from among listening, speaking and spelling in which the learner is weak is determined according to the results of sequentially-conducted tests, so that customized English word learning is performed, and pronunciation and speaking are learned first before spelling so that learning is not for passing a test but rather for enabling smooth communication.

Using an English word learning system including the above configuration, an English word learning method based on the Korean vocabulary proficiency level is described with reference to FIGS. 1 to 13. The English word learning method comprises: a word allocation step in which a learning server 1 allocates English words to be learned by a learner in the current learning round based on the leamer's information when information indicating that English word learning is started is output from a learner terminal 100; a word test step in which the learning server 1 enables the learner to be tested on the English words allocated in the word allocation step, analyzes the test results, and classifies them into English words that require learning and English words that do not require learning in the current learning round; and a learning step in which the learning server 1 provides English word learning content customized for the learner based on the analysis results of the word test step with respect to the English words that are classified as those having to be learned in the current round in the word test step.

The word allocation step is a step in which the learning server 1 allocates English words to be learned by the learner in the current learning round based on the leamer's information when information indicating that English word learning is started is output from the learner terminal 100, and includes an information collection step, an allocation step, and the like.

The information collection step is a step in which the learning server collects information necessary to indirectly determine the leamer's current English proficiency.

The allocation step is a step in which the learning server assigns English words that the learner should learn in this learning round based on the leamer's information collected in the information collection step.

The word test step is a step in which the learning server 1 enables the learner to be tested on the English words allocated in the word allocation step, analyzes the test results, and classifies them into English words that require learning and English words that do not require learning in the current learning round, and includes a concept test step, a pronunciation test step, a spelling test step, a classification step, and the like. When words are output to the learner terminal 100 for the testing of the learner, words with lower conceptual difficulty level are preferentially output in the word test step, and in the case of words with the same conceptual difficulty level, a word with lower English pronunciation and spelling difficulty level is output in consideration of phonics.

The concept test step is a step in which in which the learning server 1 transmits to the learner terminal 100 a question that can determine whether the learner knows Korean concepts corresponding to the English words allocated in the word allocation step, and confirms an answer to the question output from the learner terminal 100 to determine whether or not the answer are correct.

The pronunciation test step is a step in which the learning server transmits to the learner terminal 100 a question that can determine whether the learner knows English pronunciation corresponding to the English words matching with the question which determines the answer to be correct in the concept test step, and confirms an answer to the question output from the learner terminal 100 to determine whether or not the answer is correct, and includes a listening step, a time confirmation step, a speaking step, and the like.

The listening step is a step in which the learning server transmits to the learner terminal 100 a question that can determine whether the learner can accurately listen the English words matching with the question determined to be correct in the concept test step, and confirms an answer to the question output from the learner terminal 100 to determine whether or not the answer is correct.

The time confirmation step is a step in which the learning server selects the question which is determined the answer to be correct in the listening step, and calculates and outputs the time required for the learner to answer to the selected question.

The speaking step is a step in which the learning server compares the answer time output from the time confirmation step with a preset first reference value, and transmits to the learner terminal 100 a question that can determine whether the learner can accurately pronounce (speak) the English words matching with the question having an answer time shorter than the first reference value, and confirms an answer to the question output from the learner terminal 100 to determine whether or not the answer is correct.

The spelling test step is a step in which the learning server 1 transmits to the learner terminal 100 a question that can determine whether the learner knows the English spelling corresponding to the English words matching with the question which is determined the answer to be correct in the speaking step, and confirms an answer to the question output from the learner terminal 100 to determine whether or not the answer is correct, and includes a transmission step, a determination step, a time measurement step, and the like.

The transmission step is a step in which the learning server transmits to the learner terminal 100 a question that can determine whether the learner knows English spelling corresponding to English words that match to the question which is determined the answer to be correct in the speaking step.

The determination step is a step in which the learning server confirms the answer to the question output from the learner terminal to determine whether the learner knows the English spelling and determines whether or not the answer is correct.

The time measurement step is a step in which the learning server selects questions which is determined the answer to be correct in the determination step, and calculates and outputs the time require for the learner to answer to the selected questions.

The classification step is a step in which the learning server analyzes the results output from the concept test step and the spelling test step, and classifies them into English words that require learning and English words that do not require learning in the current learning round, and includes a first exclusion step, a second exclusion step, a selection step, and the like.

The first exclusion step is a step in which the learning server determines that the learner does not know Korean concepts corresponding to the English words matching with the question which is determined the answer to be incorrect in the concept test step, and classifies them into English words that do not require learning in the current learning round.

The second exclusion step is a step in which the learning server compares the answer time output in the time measurement step with a preset second reference value, determines that the English words matching with the question having the answer time shorter than the second reference value are words that the learner already knows, and classifies them into English words that do not require learning in the current learning round.

The selection step is a step in which the learning server classifies the remaining English words, excluding the English words classified as those not requiring learning in the first exclusion step or the second exclusion step, from among the English words allocated in the allocation step, into English words that require learning.

The learning step is a step in which the learning server 100 provides English word learning content customized for the learner based on the analysis results of the word test step with respect to the English words that are classified as those having to be learned in the current round in the word test step, and includes a listening learning step, a speaking learning step, a spelling learning step, and the like. When words are output to the learner terminal 100 for the learning of the learner, words with lower conceptual difficulty level are preferentially output in the learning step, and in the case of words with the same conceptual difficulty level, a word with lower English pronunciation and spelling difficulty level is output in consideration of phonics.

The listening learning step is a step in which a learning server analyzes the output result of the pronunciation test step, selects English words that the learner cannot listen correctly, and determines the leamer's listening proficiency for the English words to enable listening learning customized for the learner, and includes a listening target selection step, a first listening learning step, a second listening learning step, and the like.

The listening target selection step is a step in which the learning server selects English words matching with question which is determined the answer to be incorrect in the listening step and English words matching with questions whose answer time output in the time confirmation step is longer than the first reference value as English words that require listening learning.

The first listening learning step is a step in which the learning server outputs the learner terminal 100 the learning content that enables the learner to perform listening learning for the English words matching with the question that is determined the answer to be incorrect in the listening step, among the English words selected in the listening target selection step.

The second listening learning step is a step in which the learning server outputs to the learner terminal 100 the learning content that enables the learner to perform listening learning for English words matching the question whose answer time output in the time confirmation step are longer than the first reference value, among the English words selected in the listening target selection step.

The speaking learning step is a step in which the learning server outputs to the learner terminal 100 the learning content that enables the learner to perform speaking learning with respect to English words matching with the question which is determined the answer to be incorrect in the speaking step.

The spelling learning step is a step in which the learning server analyzes the output results of the spelling test step to select English words that the learner does not know the spelling correctly and enables the learner to perform customized spelling learning for the English words, and includes a spelling target selection step, a first spelling learning step, a second spelling learning step, and the like.

The spelling target selection step is a step in which the learning server selects English words matching with the question that are determined the answer to be incorrect in the determination step and English words matching with the question whose answer time output in the time measurement step is longer than the second reference value as English words that require spelling learning.

The first spelling learning step is a step in which the learning server outputs to the learner terminal 100 the learning content that enables the learner to perform spelling learning for English words matching with the question that is determined the answer to be incorrect in the determination step, among the English words selected in the spelling target selection step.

The second spelling learning step is a step in which the learning server outputs to the learner terminal 100 the learning content that enables the learner to perform spelling learning for English words matching with the question whose answer time output in the time measurement step is longer than the second reference value, among the English words selected in the spelling target selection step.

Hereinbefore, the applicant has described various embodiments of the present invention, but these embodiments are merely one embodiment which implements the technical idea of the present invention, and any change examples or modification examples should be interpreted as falling within the scope of the present invention as long as the technical idea of the present invention is implemented.

**<Description of symbols>**

| | | | |
|---|---|---|---|
| 1: | learning server | 11: | transmission/reception |
| 12: | word allocation unit | 13: | word test unit |
| 14: | learning unit | 15: | storage unit |
| 16: | control unit | 121: | information collection module |
| 122: | allocation module | 131: | concept test module |
| 132: | pronunciation test module | 133: | spelling test module |
| 134: | classification module | 141: | listening learning module |
| 142: | speaking learning module | 143: | spelling learning module |
| 132a: | listening module | 132b: | time confirmation module |
| 132c: | speaking module | 133a: | transmission module |
| 133b: | determination module | 133c: | time measurement module |
| 134a: | first exclusion module | 134b: | second exclusion module |
| 134c: | selection module | 141a: | listening target selection module |
| 141b: | first listening learning module | 141c: | second listening learning module |
| 143a: | spelling target selection module | 143b: | first spelling learning module |
| 143c: | second spelling learning module | | |

## Claims

1. An English word learning system comprising a learning server that analyzes information output from a learner terminal to enable English word learning customized for the learner,
wherein the learning server comprises:
a word allocation unit that allocates English words to be learned by the learner in the current learning round based on the leamer's information when information indicating that English word learning is started is output from the learner terminal; and
a word test unit that enables the learner to be tested on the English words allocated by the word allocation unit, analyzes the test results, and classifies them into English words that require learning and English words that do not require learning.

2. The English word learning system according to claim 2,
wherein the word test unit comprises:
a concept test module that transmits to a learner terminal a question that can determine whether the learner knows Korean concepts corresponding to the English words allocated by the word allocation unit, and confirms an answer to the question output from the learner terminal to determine whether or not the answer is correct; and
a pronunciation test module that transmits to a learner terminal a question that can determine whether the learner knows English pronunciation corresponding to the English words matching with the question which the concept test module determines the answer to be correct, and confirms an answer to the question output from the learner terminal to determine whether or not the answer is correct, and
the pronunciation test module comprises:
a listening module that transmits to a learner terminal a question that can determine whether the learner can accurately listen English words matching with the question which the concept test module determines the answer to be correct, and confirms an answer to the question output from the learner terminal to determine whether or not the answer is correct;
a time confirmation module that selects the question which the listening module determines the answer to be correct, and calculates and outputs the time required for the learner to answer to the selected question; and
a speaking module that compares the answer time output by the time confirmation module with a preset first reference value, transmits to the learner terminal a question that can determine whether the learner can accurately pronounce English words matching with the question having an answer time shorter than the first reference value, and confirms an answer to the question output from the learner terminal to determine whether or not the answer is correct.

3. The English word learning system according to claim 2,
wherein the word test unit further comprises:
a spelling test module that transmits to the learner terminal a question that can determine whether the learner knows English spelling corresponding to English words matching with the question which the speaking module determines the answer to be correct, and confirms an answer to the question output from the learner terminal to determine whether or not the answer is correct, and
the spelling test module comprises:
a transmission module that transmits to the learner terminal a question that can determine whether the learner knows English spelling corresponding to English words matching with the question which the speaking module determines the answer to be correct;
a determination module that confirms an answer to the question output from the learner terminal that can determine whether the learner knows English spelling to thereby determine whether or not the answer is correct; and
a time measurement module that selects the question which the determination module determines the answer to be correct, and calculates and outputs the time required for the learner to answer to the selected question.

4. The English word learning system according to claim 3,
wherein the word test unit further comprises:
a classification module that analyzes the results output from the concept test module and the spelling test module and classifies them into English words that requires learning and English words that do not require learning, and
the classification module comprises:
a first exclusion module that determines that the learner does not know Korean concepts corresponding to the English word matching with the question which the concept test module determines that the answer is not correct, and classifies the English word as an English word that do not require learning;
a second exclusion module that compares the answer time output by the time measurement module with a preset second reference value, determines that English words matching with the question having the answer time shorter than the second reference value are words that the learner already knows, and classifies them as English words that do not require learning; and
a selection module that classifies the remaining English words, excluding the English words that are classified as those not requiring learning in the first exclusion module or the second exclusion module among the English words allocated by the allocation module, into English words that require learning.

5. The English word learning system according to claim 4,
wherein the learning server further comprises:
a learning unit that provides a learner with customized English vocabulary learning content based on the analysis results of the pronunciation test module and the spelling test module with respect to the English words classified as those needing to be learned by the classification module;
the learning unit comprises
a listening learning module that analyzes the output result of the pronunciation test module to select English words that the learner cannot listen accurately, and determines the leamer's listening proficiency for the English words to enable listening learning customized for the learner;
a speaking learning module that outputs learning content to the learner terminal so that the learner can perform speaking learning with respect to English words matching with the question which the speaking module determines that the answer is not correct, and
a spelling learning module that analyzes the output result of the spelling test module to select English words that the learner does not know the spelling correctly, and enables the learner to perform customized spelling learning for the English words; and
the listening learning module comprises
a listening target selection module in which English words matching with the question which the listening module determines that the answer is not correct and English words matching with the question whose answer time output by the time confirmation module is longer than the first reference value are selected as English words that require listening learning;
a first listening learning module in which learning content is output to the learner terminal to enable the learner to perform listening learning with respect to English words matching with the question which the listening module determines the answer to be incorrect, among the English words selected by the listening target selection module; and
a second listening learning module in which that learning content is output to the learner terminal to enable a learner to perform listening learning with respect to English words matching with the question whose answer time output by the time confirmation module is longer than the first reference value, among the English words selected by the listening target selection module,
and
the learning content output by the first listening learning module comprises learning content that enables more listening learning than the learning content output by the second listening learning module.

6. An English word learning method comprising:
a word allocation step in which a learning server allocates English words to be learned by a learner in the current learning round based on the leamer's information when information indicating that English word learning is started is output from a learner terminal;
a word test step in which the learning server enables the learner to be tested on the English words allocated in the word allocation step, analyzes the test results, and classifies them into English words that require learning and English words that do not require learning in the current learning round; and
a learning step in which the learning server provides English word learning content customized for the learner based on the analysis results of the word test step with respect to the English words that are classified as those having to be learned in the current round in the word test step,
wherein the word test step comprises:
a concept test step in which the learning server transmits to the learner terminal a question that can determine whether the learner knows Korean concepts corresponding to the English words allocated in the word allocation step, and confirms an answer to the question output from the learner terminal to determine whether or not the answer are correct; and
a pronunciation test step in which the learning server transmits to the learner terminal a question that can determine whether the learner knows English pronunciation corresponding to the English words matching with the question which determines the answer to be correct in the concept test step, and confirms an answer to the question output from the learner terminal to determine whether or not the answer is correct.

7. The English word learning method according to claim 6,
wherein the pronunciation test step comprises:
a listening step in which the learning server transmits to the learner terminal a question that can determine whether the learner can accurately listen the English words matching with the question determined to be correct in the concept test step, and confirms an answer to the question output from the learner terminal to determine whether or not the answer is correct;
a time confirmation step in which the learning server selects the question which is determined the answer to be correct in the listening step, and calculates and outputs the time required for the learner to answer to the selected question; and
a speaking step in which the learning server compares the answer time output from the time confirmation step with a preset first reference value, transmits to the learner terminal a question that can determine whether the learner can accurately pronounce the English words matching with the question having an answer time shorter than the first reference value, and confirms an answer to the question output from the learner terminal to determine whether or not the answer is correct, and
the word test step comprises:
a spelling test step in which the learning server transmits to the learner terminal a question that can determine whether the learner knows the English spelling corresponding to the English words matching with the question which is determined the answer to be correct in the speaking step, and confirms an answer to the question output from the learner terminal to determine whether or not the answer is correct; and
a classification step in which the learning server analyzes the results output from the concept test step and the spelling test step, and classifies them into English words that require learning and English words that do not require learning in the current learning round.

8. The English word learning method according to claim 7,
wherein the classification step comprises:
a first exclusion step in which the learning server determines that the learner does not know Korean concepts corresponding to the English words matching with the question which is determined the answer to be incorrect in the concept test step, and classifies them into English words that do not require learning in the current learning round;
a second exclusion step in which the learning server compares the answer time output in the time measurement step with a preset second reference value, determines that the English words matching with the question having the answer time shorter than the second reference value are words that the learner already knows, and classifies them into English words that do not require learning in the current learning round; and
a selection step in which the learning server classifies the remaining English words, excluding the English words classified as those not requiring learning in the first exclusion step or the second exclusion step, from among the English words allocated in the allocation step, into English words that require learning, and
the learning step comprises:
a listening learning step in which a learning server analyzes the output result of the pronunciation test step, selects English words that the learner cannot listen correctly, and determines the leamer's listening proficiency for the English words to enable listening learning customized for the learner;
a speaking learning step in which the learning server outputs to the learner terminal the learning content that enables the learner to perform speaking learning with respect to English words matching with the question which is determined the answer to be incorrect in the speaking step; and
a spelling learning step in which the learning server analyzes the output results of the spelling test step to select English words that the learner does not know the spelling correctly and enables the learner to perform customized spelling learning for the English words.
